# NEUE EUROPÄISCHE PATENTSCHRIFT

(11) **EP 1 555 151 B2**
(45) Veröffentlichungstag und Bekanntmachung des Hinweises auf die Entscheidung über den Einspruch: **05.01.2011**
(45) Hinweis auf die Patenterteilung: 21.05.2008
(21) Anmeldenummer: 04030502.1
(22) Anmeldetag: 22.12.2004
(51) Int. Cl.: B60J 1/20

(54) **Fahrzeugfensterrollo**
Roller blind for vehicle
Store à enrouleur pour véhicule

(30) Priorität: 16.01.2004 DE 202004000631 U
(43) Veröffentlichungstag der Anmeldung: 20.07.2005
(73) Patentinhaber: HS Products Engineering GmbH, 82239 Alling (DE)
(72) Erfinder: Ziegenbein, Werner, 81929 München (DE)
(74) Vertreter: Schatt, Markus F.

(56) Entgegenhaltungen:
- EP-A- 0 911 219
- EP-A- 1 251 021
- EP-A2- 0 652 136
- DE-A1- 3 813 153
- DE-C1- 10 132 080
- DE-U1- 7 904 967
- FR-A- 1 184 013
- FR-A1- 2 631 374
- FR-A1- 2 823 791
- US-A- 1 578 641
- US-A- 1 823 290
- US-A- 4 482 137
- US-A- 5 135 279
- US-A1- 2003 066 615

## Beschreibung

Die Erfindung betrifft ein Fahrzeugfensterrollo nach dem Oberbegriff des Patentanspruches 1, wie in der EP 0 652 136 A2 gezeigt.

Ein derartiges aus US-A-1,823,290 bekanntes Fahrzeugfensterrollo beinhaltet eine rohrförmige ausgestaltete Wickelwelle, auf welche eine Rollobahn aufgewickelt werden kann. Eine als Spiralfeder oder Rollofeder ausgebildete Rückstellfeder greift an einem Wellenende an der Wickelwelle an, so dass die Wickelwelle in Aufwickelrichtung vorgespannt ist. Das äußere Federende ist an einem fahrzeugfesten Federgehäuse abgestützt und das innere Federende weist einen Federmitnehmer auf, der drehfest mit der Wickelwelle verbunden ist.

Aus DE 35 32 013 A1 ist ein Fahrzeugfensterrollo bekannt, bei welchem die Rollobahn mittels einer teleskopierbaren Stange, die von einem motorischen Antrieb betätigt wird, gegen die Kraft einer Rückstellfeder von der Wickelwelle in den ausgefahrenen Zustand gebracht wird.

Ferner ist aus US 1,630,416 ein Fensterrollo bekannt, bei welchem die Rollobahn von Hand gegen die Kraft einer Feder von der Wickelwelle abgezogen wird.

Aufgabe der Erfindung ist es, eine wirkungsvolle und raumsparende Erzeugung der an der Wickelwelle angreifenden Federrückstellkraft, zu erreichen.

Diese Aufgabe wird erfindungsgemäß durch die Merkmale des Patentanspruches 1 gelöst.

Die Triebfeder besteht aus einem Federband, welches im ungespannten Zustand die Form einer Spirale, deren Wihdungsabstand von innen nach außen zunimmt, aufweist. DieTriebfeder ist in einem Federgehäuse montiert, dessen Innendurchmesser bedeutend kleiner als der Außendurchmesser im entspannten Zustand ist. In diesem Zustand liegen die Windungen als dichtes Paket und mit starkem Druck an der Innenwand des Federgehäuses an. In diesem Zustand hat die Triebfeder die Form einer Rollfeder. Beim Drehen des inneren Federendes (Federkernes) wird die Feder gespannt. Dieses Spannen der Feder vollzieht sich aufgrund der unterschiedlichen Tangentialkräfte, wobei anfangs eine steil ansteigende Federkennlinie sich ergibt, die nach einigen Umdrehungenbeispielsweise zwei bis drei Umdrehungen, sich abflacht und geradlinig bis zum Sattaufzug der Triebfeder weiter verläuft. Derartige Triebfedern in Form einer Spiral- oder Rollfeder werden beispielsweise in Sicherheitsgurtaufrollautomaten verwendet, um in Bandaufzugsrichtung auf das Sicherheitsgurtband eine Vorspannung auszuüben.

Zur Übertragung der Federvorspannung auf die Wickelwelle ist mit dem inneren Federende der Triebfeder ein Federmitnehmer verbunden, der drehfest mit einem Aufwickelrohr der Wickelwelle verbunden ist. Hierzu weist der Federmitnehmer ein Federmitnehmerteil auf, welches im Querschnitt ein von der Kreisform abweichendes Profil besitzt, das in ein entsprechendes Profil an der Innenseite des Aufwickelrohres von einem Ende des Aufwickelrohres her eingreift.

Die Wickelwelle weist zur drehbaren Lagerung am Fahrzeug einen Lagerzapfen auf, der mit dem zur Rückstellfeder entgegengesetzt liegenden Röhrende des Aufwickelrohres drehfest verbunden ist. Der Lagerzapfen kann ein- oder erfindungsgemäß mehrteilig ausgebildet sein. Der mehrteilig ausgebildete Lagerzapfen weist ein Innengewinde auf welches auf dem Außengewinde einer fahrzeugfesten Spindel drehbar gelagert ist. Hierdurch lässt sich eine Axialverschiebung der Wickelwelle und insbesondere des Aufwickelrohres beim Ausziehen der Rollobahn und beim Aufwickeln der Rollobahn erreichen. Der Lagerzapfen kann hierzu in axialer Richtung fest mit der Wickelwelle verbunden sein. Zur Unterstützung der axialen Verschiebbarkeit der Wickelwelle und insbesondere des Aufwickelrohres kann am Federmitnehmer ein stabförmiges Mitnehmerteil vorgesehen sein, welches das von der Kreisform abweichende Profil aufweist. Der Federmitnehmer ist vorzugsweise am Federgehäuse in radialer Richtung und gegebenenfalls in axialer Richtung abgestützt. Ferner kann der Federmitnehmer einen Achsstummel aufweisen, an welchem das innere Federende angreift. Dieser Achsstummel ist mit einem weiteren am Lagerzapfen am anderen Wellenende vorgesehenen Achsstummel ausgerichtet und zur Achse des Aufwickelrohres koaxial angeordnet. Hierdurch erreicht man eine in radialer und axialer Richtung definierte Abstützung der Wickelwelle am Fahrzeugaufbau, wobei die Triebfeder, wie schon erläutert, an einem Wellenende der Wickelwelle angreift.

Beim Abwickeln der Rollobahn liegt die Rückstellkraft der Triebfeder vorzugsweise im geradlinigen Teil der Federkennlinie. Hierzu kann beispielsweise bei voll aufgewickelter Rollobahn das innere Federende (Federkern) mit einigen, beispielsweise zwei bis drei Umdrehungen bis zum Erreichen des geradlinigen Teil der Federkennlinie gedreht und damit vorgespannt sein. Im voll aufgewickelten Zustand der Rollobahn wird dieses somit unter Vorspannung gehalten. Dabei kann die Oberkante der Rollobahn, beispielsweise über eine mit der Oberkante verbundene Leiste an einem fahrzeugfesten Anschlag anliegen.

Das Fensterrollo kann bei den Seitenfenstern oder auch den Heckfensters eines Kraftfahrzeugs zum Einsatz kommen.

Anhand der Figuren wird an Ausführungsbeispielen die Erfindung noch näher erläutert.

Es zeigt
- Fig. 1: ein erstes Ausführungsbeispiel; und
- Fig. 2: ein zweites nicht beanspruchtes Ausführungsbeispiel.

Die beiden Ausführungsbeispiele sind Fahrzeugfensterrollos, welche eine Rollobahn 17 aufweisen, die zum teilweisen oder ganzen Abdecken des Fahrzeugfensters dienen. Die Rollobahn kann in bekannter Weise ausgebildet sein, wobei an der nicht dargestellten Oberkante der Rollobahn 17 eine Leiste befestigt ist, um die Rollobahn in die ausgefahrene oder aufgewickelte Stellung zu bringen. Gegebenenfalls kann die Oberkante der Rollobahn in unterschiedlichen Höhen durch entsprechende Anschläge und Haltevorrichtungen, die an der mit der Oberkante verbundenen Leiste angreifen, in der gewünschten Auszugsposition gehalten werden.

Bei allen dargestellten Ausführungsbeispielen beinhaltet eine Wickelwelle 9, auf welche die Rollobahn aufgewickelt werden kann und von welcher die Rollobahn 17 abgewickelt werden kann, mehrere Bestandteile. Ein wesentlicher Bestandteil ist ein Aufwickelrohr 5, dessen Länge in etwa der Breite der Rollobahn 17 entspricht, wie aus den Figuren zu ersehen ist. Die Wickelwelle 9 beinhaltet ferner einen Federmitnehmer 6, der ein stabförmiges Federmitnehmerteil 12 aufweist. Das stabförmige Mitnehmerteil 12 besitzt im Querschnitt eine Profilierung, die von einer Kreisform abweicht. Das Profil kann beispielsweise eine mehreckige Form, insbesondere Vierkantform oder eine mit Vorsprüngen versehene Kreisform oder eine ovale Form haben. Die von der Kreisform abweichende Profilierung greift in eine an der Innenseite bzw. Innenwand des Aufwickelrohres 5 vorgesehene entsprechende Profilierung ein, so dass eine drehfeste Verbindung zwischen dem Federmitnehmer 6 und dem Aufwickelrohr 5 hergestellt wird.

Der Federmitnehmer besitzt ferner einen Achsstummel 13, welcher mit einem inneren Federende 10 einer als Triebfeder 7 ausgebildeten Rückstellfeder drehfest verbunden ist. Die Triebfeder 7 liegt in Form einer Spiralfeder oder Rollfeder, deren insbesondere äußere Windungen als dichtes Paket in einem Federgehäuse 8 angeordnet sind, vor. Die Triebfeder wird von einem Federband gebildet, dessen inneres Federende 10, wie schon erläutert, mit dem Achsstummel 13 des Federmitnehmers 6 drehfest verbunden ist. Ein äußeres Federende 16 des Federbandes der Triebfeder ist am Federgehäuse 8 an einer Stütze 11 abgestützt. Das Federgehäuse 8 ist fest am Fahrzeugaufbau angeordnet. Auf diese Weise wird das äußere Federende 16 am Fahrzeugaufbau abgestützt.

Der Federmitnehmer 6 ist außerdem am Federgehäuse 8 in radialer und axialer Richtung abgestützt. Hierzu ist am Federmitnehmer 6 ein scheibenförmiger Flansch 15 einstückig vorgesehen, welcher zumindest in axialer Richtung am Federgehäuse 8 abgestützt wird. Ferner kann das Federgehäuse 8 so ausgebildet sein, dass über den Flansch 15 auch eine radiale Führung des Federmitnehmers 6 erreicht wird. Der Achsstummel 13 kann hierzu in einer Mittenbohrung in der Stirnwand des Federgehäuses 8 gelagert sein. Hierdurch wird eine exakte axiale Ausrichtung des Aufwickelrohres 5 über den Federmitnehmer 6 und das Federgehäuse 8 am Fahrzeugaufbau gewährleistet. Der Achsstummel 13 ist koaxial zur Achse des Aufwickelrohres 5 ausgerichtet.

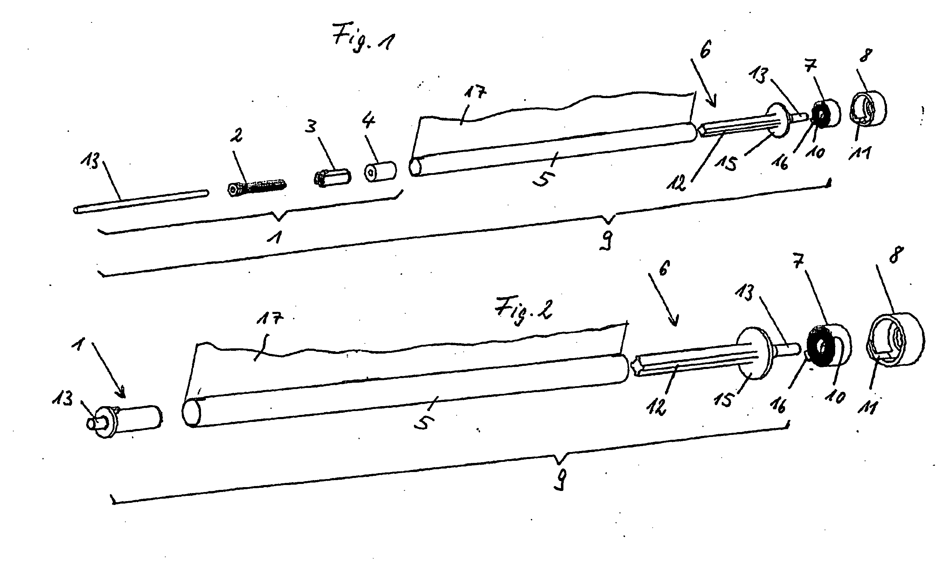

Am anderen Ende des Aufwickelrohres 5 ist ein Lagerzapfen 1 vorgesehen, der drehfest mit dem Aufwickelrohr 5 verbunden ist und dessen Achse mit der Achse des Aufwickelrohres 5 und der Achse des Federmitnehmers 6 ausgerichtet ist. Für die definierte Lagerung des Wellenendes der Wickelwelle 9, welche entgegengesetzt zur Triebfeder 7 liegt, ist der Lagerzapfen 1 an einer nicht näher dargestellten fahrzeugfesten Lagerung gelagert. Beim Ausführungsbeispiel der Fig. 2 erfolgt diese Lagerung drehbar gegenüber dem Fahrzeugaufbau. Hierzu besitzt der Lagerzapfen 1 einen Achsstummel 13, der beim Ausführungsbeispiel der Fig. 2 vom fahrzeugfesten Lager drehbar aufgenommen werden kann. Das drehfest mit dem Ende des Aufwickelrohres 5 verbundene Teil des Lagerzapfens 1 sowie der Achsstummel 13 sind beim Ausführungsbeispiel der Fig. 2 aus einem Stück hergestellt.

Beim Ausführungsbeispiel der Fig. 1 besteht der Lagerzapfen 1 aus mehreren Teilen. Diese umfassen eine Mutter 3, welche drehfest mit dem Aufwickelrohr 5 verbunden wird. Das Innengewinde der Mutter 3 ist auf ein Außengewinde einer Spindel 2 aufgeschraubt. Der Achsstummel 13 ist durch eine axial verlaufende Mittenbohrung der Spindel 2 und eine in das Aufwickelrohr 5 eingesetzte Hülse 4 hindurchgesteckt. Dadurch wird eine axiale Ausrichtung der Spindel 2 und der darauf entlang dem Außengewinde verdrehbaren Mutter 3 sowie der Hülse 4, welche die Teile des Lagerzapfens 1 bilden, mit dem Aufwickelrohr 5 erreicht. Die Spindel 2 ist gegebenenfalls über den Achsstummel 13 am Fahrzeugaufbau befestigt. Auf diese Weise wird ferner eine koaxiale Ausrichtung mit dem Federmitnehmer 6 am anderen Ende des Aufwickelrohres erreicht.

Beim Drehen des Aufwickelrohres 5 beim Abziehen oder Aufwickeln der Rollobahn 17 wird aufgrund des Schraubgewindeeingriffs zwischen der Spindel 2 und der fest mit dem Aufwickelrohr 5 verbundenen Mutter 3 eine axiale Verschiebung des Aufwickelrohres 5 gewährleistet. Dabei wird das andere Ende des Aufwickelrohres 5 entlang dem stabförmigen Federmitnehmerteil 12 bewegt.

### [Bezugszeichenliste]

- 1: Lagerzapfen
- 2: Spindel
- 3: Mutter
- 4: Hülse
- 5: Aufwickelrohr
- 6: Federmitnehmer
- 7: Triebfeder (Rückstellfeder)
- 8: Federgehäuse
- 9: Wickelwelle
- 10: inneres Federende
- 11: Stütze
- 12: stabförmiges Federmitnehmerteil
- 13: Achsstummel
- 14: Achsstummel
- 15: Flansch
- 16: äußeres Federende
- 17: Rollobahn

## Patentansprüche

1. Fahrzeugfensterrollo mit einer Rollbahn (17) zum zumindest teilweisen Abdecken eines Fahrzeugfensters, einer Wickelwelle (9), auf welche die Rollobahn (17) aufgewickelt und auf welcher die Rollobahn (17) abgewickelt werden kann, einer Rückstellfeder, welche an der Wickelwelle (9) angreift und die Wickelwelle (9) in Aufwickelrichtung vorspannt, wobei die Rückstellfeder als Triebfeder (7) in form einer Spiralfeder oder Rollfeder ausgebildet ist, die mit ihrem inneren Federende (10) am einen Wellenende der Wickelwelle (9) angreift und mit ihrem äußeren Federende (16) an einem fährzeugfesten Federgehäuse (8) abgestützt ist, wobei das andere Wellenende der Wickelwelle (9) drehbar am Fahrzeugaufbau gelagert ist, und wobei die Wickelwelle (9) ein Aufwickelrohr (5) aufweist, mit welchem ein mit dem inneren Federende (10) verbundener Federmitnehmer (6) drehfest verbunden ist, wobei
der Federmitnehmer (6) ein Federmitnehmerteil (12) aufweist, weiches ein im Querschnitt von der Kreisform abweichendes Profil aufweist, das in ein entsprechendes Profil an der Innenwand des Aufwickelrohres (5) eingreift, wobei
die Wickelwelle (9) zur drehbaren Lagerung arm Fahrzeug einen Lagerzapfen (1) aufweist, der mit dem zur Triebfeder (7) entgegengesetzt liegenden Rohrende des Aufwickelrohres (5) drehfest verbunden ist und
**dadurch gekennzeichnet, dass** der Lagerzapfen (1) ein Innengewinde aufweist, welches auf ein Außengewinde einer fahrzeugfesten Spindel (2) drehbar und axial verschiebbar aufgeschraubt ist.

2. Fahrzeugfensterrollo nach Anspruch 1,
**dadurch gekennzeichnet, dass** der Lagerzapfen (1) in axialer Richtung der Wickelwelle (9) fest mit der Wickelwelle (9) verbunden ist.

3. Fahrzeugfensterrollo nach einem der Ansprüche 1 oder 2,
**dadurch gekennzeichnet, dass** das Federmitnehmerteil (12) stabförmig ausgebildet ist, und das Autwickelrohr (5) gegenüber dem Federmitnehmerteil (12) axial verschiebbar ist.

4. Fahrzeugfensterrollo nach einem der Ansprüche 1 bis 3,
**dadurch gekennzeichnet, dass** der Federmitnehmer (6) einen Achsstummel (13) aufweist, an welchem das innere Federende (10) eingreift, und welcher mit einem weiteren am Lagerzapfen (1) vorgesehenen Achsstummel (14) koaxial angeordnet ist, wobei die beiden Achsstummel (13, 14) mit der Achse des Aufdvickelrohres (5) ausgerichtet sind.

5. Fahrzeugfensterrollo nach einem der Ansprüche 1 bis 4,
**dadurch gekennzeichnet, dass** der Federmitnehmer (6) am Federgehäuse (8) in radialer und axialer Richtung abgestützt ist

6. Fahraeugfensterrollo nach einem der Ansprüche 1 bis 5,
**dadurch** gekennzeichet, dass beim Abwickeln der Rollbahn (17) die Rückstellfeder der Triebfeder (7) im geradlinigen Teil der Federkennlinie liegt.

## Claims

1. A vehicle window roller blind comprising a roller blind web (17) for at least partially covering a vehicle window, a winding shaft (9) on to which the roller blind web (17) can be wound and from which the roller blind web (17)can be unwound, a return spring which engages the winding shaft (9) and biases the shaft (9) in the winding-on direction, wherein the return spring is a drive spring (7) in the form of a spiral spring or rolling spring which with its inner spring end (10) engages the one end of the winding shaft (9) and which with its outer spring end (16) is supported at a spring housing (9) which is fixed with respect to the vehicle, wherein the other end of the winding shaft (9) is supported rotatably on the vehicle structure and wherein the winding shaft (9) has a winding-on tube (5) to which a spring entrainment member (6) connected to the inner spring end (10) is non-rotatably connected, wherein the spring entrainment member(6) has a spring entrainment portion (12) having a profile which differs in cross-section from the circular shape and which engages into a corresponding profile at the inside wall of the winding-on tube (5), wherein
for rotatable mounting to the vehicle the winding shaft (9) has a mounting trunnion (1) which is non-rotatably connected to the tube end of the winding-on tube (5), which is in opposite relationship to the drive spring (7), and
**characterised in that** the mounting trunnion (1) has a female screwthread which is screwed rotatably and axially displaceably on to a male screwthread of a spindle (2) which is fixed with respect to the vehicle.

2. A vehicle window roller blind according to claim 1 **characterised in that** the mounting trunnion (1) is connected to the winding shaft (9) fixedly in the axial direction of the winding shaft (9).

3. A vehicle window roller blind according to one of claims 1 or 2 **characterised in that** the spring entrainment portion (12) is of a bar-shaped configuration and the winding-on tube (5) is displaceable axially with respect to the spring entrainment portion (12).

4. A vehicle window roller blind according to one of claims 1 to 3 **characterised in that** the spring entrainment member (6) has a stub shaft (13) which is engaged by the inner spring end (10) and which is arranged coaxially with a further stub shaft (14) provided at the mounting trunnion (1), wherein the two stub shafts (13, 14) are aligned with the axis of the winding-on tube (5).

5. A vehicle window roller blind according to one of claims 1 to 4 **characterised in that** the spring entrainment member (6) is supported in the radial and axial directions on the spring housing (8).

6. A vehicle window roller blind according to one of claims 1 to 5 **characterised in that** when the roller blind web (17) is unwound the return spring of the drive spring (7) is in the straight part of the spring characteristic.

## Revendications

1. Store de baie de véhicule comprenant un lé (75) de store pour recouvrir au moins en partie une baie de véhicule, un arbre (9) d'enroulement sur lequel le lé (17) de store peut être enroulé et sur lequel le lé (17) de store peut être déroulé, un ressort de rappel qui attaque l'arbre (9) d'enroulement et qui précontraint l'arbre (9) d'enroulement dans la direction d'enroulement, le ressort de rappel étant constitué en ressort (7) moteur sous la forme d'un ressort spirale ou d'un ressort à force constante qui attaque par son extrémité (10) intérieure de ressort un bout de l'arbre (9) d'enroulement et qui s'appuie par son extrémité (16)extérieure de ressort sur un boîtier (8) de ressort fixé au véhicule, l'autre bout de l'arbre (9) d'enroulement étant monté tournant sur la carrosserie du véhicule et l'arbre (9) d'enroulement, dont un entraîneur (6) de ressort relié à l'extrémité (10) intérieure du ressort est solidaire en rotation, l'entraîneur (6) de ressort comportant une partie (12) d'entraîneur de ressort qui a un profil s'écartant en section transversale de la forme circulaire et pénétrant dans un profil correspondant sur la paroi intérieure du tube (5) d'enroulement,
l'arbre (9) d'enroulement ayant pour le montage en rotation sur le véhicule un tourillon (1) formant palier, qui est solidaire en rotation de l'extrémité du tube (5) d'enroulement opposé au ressort (7) moteur, et
**caractérisé en ce que** le tourillon (1) formant palier a un taraudage qui se visse en tournant et en se déplaçant axialement sur un filetage d'une broche (2) fixée au véhicule.

2. Store de baie de véhicule suivant la revendication 1 **caractérisé en ce que** le tourillon (1) formant palier est relié fixement dans la direction axiale de l'arbre (9) d'enroulement à l'arbre (9) d'enroulement.

3. Store de baie de véhicule suivant l'une des revendications 1 ou 2, **caractérisé en ce que** la partie (12) d'entraîneur de ressort est constituée sous la forme d'un barreau et **en ce que** le tube (5) d'enroulement peut coulisser axialement par rapport à la partie (12) d'entraîneur de ressort.

4. Store de baie de véhicule suivant l'une des revendications 1 à 3, **caractérisé en ce que** l'entraîneur (6) de ressort a un tourillon (13) qu'attaque l'extrémité (10) intérieure de ressort et qui est disposé co-axialement à un autre tourillon (14) prévu sur le tourillon (1) formant palier, les deux tourillons (13, 14) étant alignés avec l'axe du tube (5) d'enroulement.

5. Store de baie de véhicule suivant l'une des revendications1 à 4, **caractérisé en ce que** l'entraîneur (6) de ressort s'appuie en direction radiale et axiale sur le boîtier (8) de ressort.

6. Store de baie de véhicule suivant l'une des revendications 1 à 5, **caractérisé, en ce que**, lors du déroulement du lé (17) de store, le ressort de rappel du ressort (7) moteur se trouve dans la partie rectiligne de la courbe caractéristique de ressort.
